# EUROPEAN PATENT APPLICATION

(11) **EP 2 023 039 A1**
(43) Date of publication of application: **11.02.2009**
(21) Application number: 08161502.3
(22) Date of filing: 30.07.2008
(51) Int. Cl.: F21V 8/00, G02F 1/13357, G02B 6/00

(54) **Thin Light Guiding Plate And Methods Of Manufacturing**

(30) Priority: 08.08.2007 US 890969
(71) Applicant: Rohm and Haas Denmark Finance A/S, 2100 Copenhagen (DK)
(72) Inventor: Greener, Jehuda, Rochester, NY 14618 (US); Anderson, Charles C., Penfield, NY 14526 (US); Lee, Junwon, Webster, NY 14580 (US); Lei, Herong, Webster, NY 14580 (US); Landry, Michael R., Wolcott, NY 14590 (US); Hu, Tseng-En, Rochester, NY 14609 (US); Aylward, Peter T., Hilton, NY 14468 (US)
(74) Representative: Kent, Venetia Katherine

(57) **Abstract**

The present invention provides a composite light guiding plate comprising a light guiding layer comprising an incident face for receiving light from at least one light source, a light guiding output surface that is also generally orthogonal to the incident face, a featured surface, opposite the light-guiding output surface and generally orthogonal to the input face for redirecting light through the light guiding output surface. Further, the featured surface comprises a plurality of rows of linear prismatic structures extended in a length direction that is substantially perpendicular to the incident face and having height and width dimensions of 10 to 200 microns and wherein the length-to-width aspect ratio of the linear prismatic structures is greater than 100:1 the thickness of the light guiding layer is less than 1 mm. Further, the plate is formed from polymeric materials comprising polyesters, amorphous polyesters, polyarylates, polycarbonates, polyamides, polyether-amides, polyamide-imides, polyimides, polyetherimides, cyclic olefin polymers, impact-modified polymethacrylates, polyacrylates, polyacrylonitrile, polystyrenes, polyethers, ccllulosics, sulfur-containing polymers and blends or alloys of two or more polymers or copolymers thereof. Additionally, the plate comprises a light extraction layer comprising an input surface having a plurality of protruding light extraction features that have tips that are bonded to the light-guiding output surface of the light guiding layer and provide optical contact between the light guiding and light extraction layers and an illumination output surface for providing light output from the composite illumination plate. Further, the thickness of the light extraction layer is less than 1 mm and wherein one or more channels of air or other gas are sandwiched between the light guiding layer and the light extraction layer.

## Description

### BACKGROUND OF THE INVENTION

The present invention generally relates to an illumination apparatus and more particularly, relates to light guiding and redirection articles for providing light to a display panel.

Transmissive Liquid Crystal Display (LCD) panels offer a compact, lightweight alternative to other types of displays, but require some type of backlight illumination to provide the light for modulation. This backlight illumination is typically provided by a light-providing surface that is positioned behind the LCD panel and that redirects light from one or more light sources through the LCD panel. One exemplary type of light providing surface is a Light Guiding Plate (LGP). The LGP acts as a waveguide, providing Total Internal Reflection (TIR) for incident light that it receives from one or more sources that are positioned at its side edges. Some type of surface feature is provided along sides or edges of the LGP in order to extract light from the LGP and to redirect this light outwardly toward the display panel.

Conventional light guide plates are thick and cumbersome, typically having a thickness that exceeds that of the LCD panel itself. Another drawback relates to the relative inflexibility of conventional light guide plates. When fabricated from PMMA or from other materials, a light guide plate can be brittle and easily breakable if it becomes too thin.

The advantages in fabricating a reduced-profile light guide plate are well appreciated by those skilled in the illumination arts. In acknowledgement of the inherent advantages of thin and flexible light-guide structures for illumination, a number of solutions have been proposed. For example, U.S. Patent Application Publication 2005/0259939 entitled "Ultra Thin Lighting Element" by Rinko describes a flexible illuminator formed as a waveguide and using patterns of discrete, diffractive structures for light extraction.

Although there have been a number of proposed solutions for thin-profile light guide plates, however, some drawbacks remain. Not all plastic materials can be reliably fabricated to thin gauges without risk of brittleness and cracking. For example, PMMA, although mentioned in the '9939 Rinko disclosure, would prove difficult to fabricate at a thickness below 1 millimeter. Fabrication methods for this solution would also be challenging using existing techniques and conventional materials.

Thus, there is a need for a thin illumination film or light guide plate that redirects light from a surface for use with LCD and other types of display devices and illumination applications.

### SUMMARY OF THE INVENTION

In one aspect of the invention there is provided a composite light guiding plate comprising: a light guiding layer comprising: an incident face for receiving light from at least one light source; a light guiding output surface that is also generally orthogonal to the incident face; a featured surface, opposite the light-guiding output surface and generally orthogonal to the input face for redirecting light through the light guiding output surface; wherein the featured surface comprises a plurality of rows of linear prismatic structures extended in a length direction that is substantially perpendicular to the incident face and having height and width dimensions of 10 to 200 microns, wherein the length-to-width aspect ratio of the linear prismatic structures is greater than 100:1 the thickness of the light guiding layer is less than 1 mm; and wherein the plate is formed from polymeric materials comprising polyesters, amorphous polyesters, polyarylates, polycarbonates, polyamides, polyether-amides, polyamide-imides, polyimides, polyetherimides, cyclic olefin polymers, impact-modified polymethacrylates, polyacrylates, polyacrylonitrile, polystyrenes, polyethers, cellulosics, sulfur-containing polymers and blends or alloys of two or more polymers or copolymers thereof; and a light extraction layer comprising: an input surface having a plurality of protruding light extraction features that have tips that are bonded to the light-guiding output surface of the light guiding layer and provide optical contact between the light guiding and light extraction layers; an illumination output surface for providing light output from the composite illumination plate; and wherein the thickness of the light extraction layer is less than 1 mm and wherein one or more channels of air or other gas are sandwiched between the light guiding layer and the light extraction layer.

In another aspect of the invention there is provided a method for forming a flexible light guiding plate comprising: extrusion roll molding a flexible light guiding plate having a featured surface and a light-guiding output surface onto a carrier web; releasing the light guiding plate from the used carrier web; and wherein the light guide plate further comprises: an incident face for receiving light from at least one light source; an output surface, generally orthogonal to the incident face; a featured surface generally orthogonal to the incident face for redirecting light through the output surface; wherein the featured surface comprises a plurality of rows of linear light redirecting structures extended in a length direction that is substantially perpendicular to the incident face, each linear light redirecting structure having height and width dimensions of 10 to 200 microns; wherein the length-to-width aspect ratio of the linear light redirecting structures is greater than 100:1 1 and wherein the light guiding plate has a total thickness less than 1 mm; and wherein the plate is formed from polymeric materials comprising polyesters, amorphous polyesters, polyarylates, polycarbonates, polyamides, polyether-amides, polyamide-imides, polyimides, polyetherimides, cyclic olefin polymers, impact-modified polymethacrylates, polyacrylates, polyacrylonitrile, polystyrenes, polyethers, cellulosics, sulfur-containing polymers and blends or alloys of two or more polymers or copolymers thereof; and

In another aspect of the invention there is provided a method for forming a composite light guiding plate comprising: forming a flexible light guiding layer having a featured surface and a light-guiding output surface by extrusion roll molding using a first carrier web; forming a light extraction layer having an input surface with a plurality of protruding light-extraction features; bonding protruding ends of the light extraction features of the light extraction layer to the light-guiding output surface of the light guiding layer to form the composite light guiding plate; and wherein the composite light guiding plate further comprises: a light guiding layer comprising: an incident face for receiving light from at least one light source; a light guiding output surface that is also generally orthogonal to the incident face for directing light outward from the light guiding layer; a featured surface, opposite the light-guiding output surface and generally orthogonal to the input face for redirecting light through the light guiding output surface; wherein the featured surface comprises a plurality of rows of linear prismatic structures extended in a length direction that is substantially perpendicular to the incident face and having height and width dimensions of 10 to 200 microns, wherein the length-to-width aspect ratio of the linear prismatic structures is greater than 100:1 the thickness of the light guiding layer is less than 1 mm; and wherein the plate is formed from polymeric materials comprising polyesters, amorphous polyesters, polyarylates, polycarbonates, polyamides, polyether-amides, polyamide-imides, polyimides, polyetherimides, cyclic olefin polymers, impact-modified polymethacrylates, polyacrylates, polyacrylonitrile, polystyrenes, polyethers, cellulosics, sulfur-containing polymers and blends or alloys of two or more polymers or copolymers thereof; and a light extraction layer comprising: an input surface having a plurality of protruding light extraction features that have tips that are bonded to the light-guiding output surface of the light guiding layer and provide optical contact between the light guiding and light extraction layers; an illumination output surface for providing light output from the composite light guiding plate; and wherein the thickness of the light extraction layer is less than 1 mm and wherein one or more channels of air or other gas are sandwiched between the light guiding layer and the light extraction layer.

### BRIEF DESCRIPTION OF THE DRAWINGS

Figure 1 is a perspective view from the output surface showing a flexible light guiding film according to the present invention;

Figure 2 is a perspective view from the input surface showing the flexible light guiding film of Figure 1;

Figure 3 is a perspective view from the input surface showing the flexible light guiding film of Figure 1 with prismatic structures extended lengthwise and having some amount of curvature;

Figure 4 is a perspective view of a display apparatus using the flexible light guiding film in one embodiment;

Figure 5 is a perspective view of a composite illumination film according to one embodiment;

Figure 6 is a cross-sectional side view of a composite illumination film in one embodiment;

Figure 7 is a perspective view showing components of a composite illumination film;

Figure 8 is a schematic block diagram of a fabrication apparatus for forming a flexible light guiding film using web manufacture; and

Figure 9 is a schematic block diagram of a fabrication apparatus for forming a composite illumination film using web manufacture.

### DETAILED DESCRIPTION OF THE INVENTION

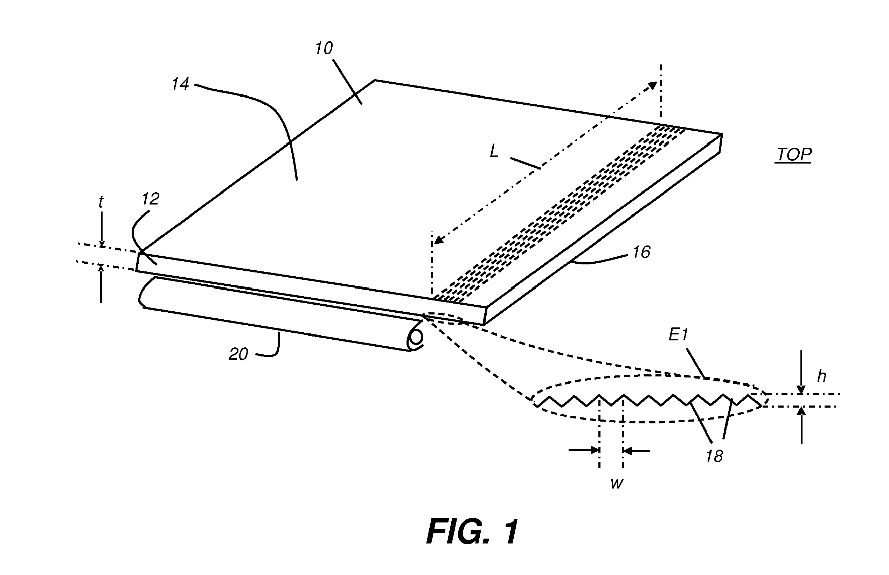

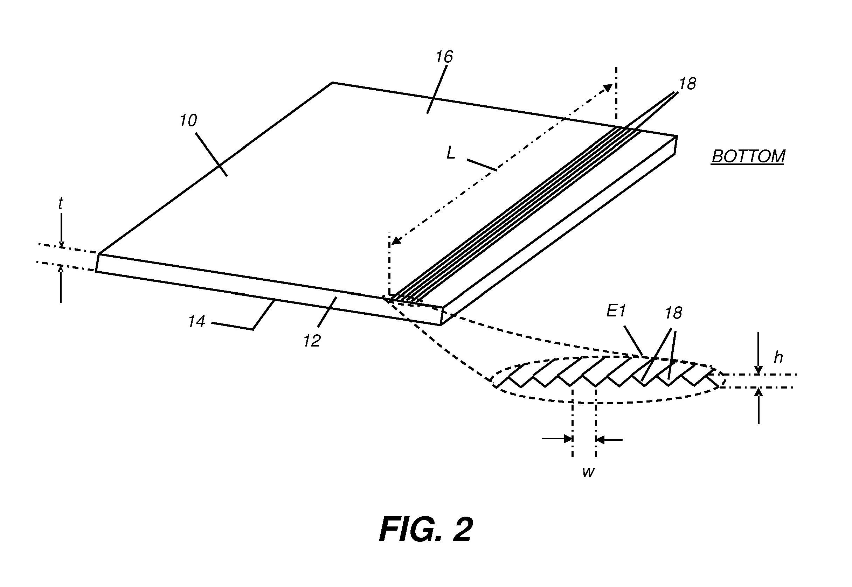

Referring to Figure 1, there is shown a perspective view from the output surface 14 showing a flexible light guiding film 10 according to the present invention. Light guiding film 10 has a featured surface 16, shown from the top in the perspective view of Figure 2. Featured surface 16 has a number of rows of linear prismatic structures 18 that extend in a length direction L. A cross-sectional view of prismatic structures is shown in enlargement E1. Prismatic structures 18 have height h and width w dimensions within 10 to 200 microns. Prismatic structures 18 can be continuous, extending fully across the length or breadth of light guiding film 10, but may be of shorter lengths. In addition, the length:width ratio of the linear prismatic structures 18 is greater than 100:1.

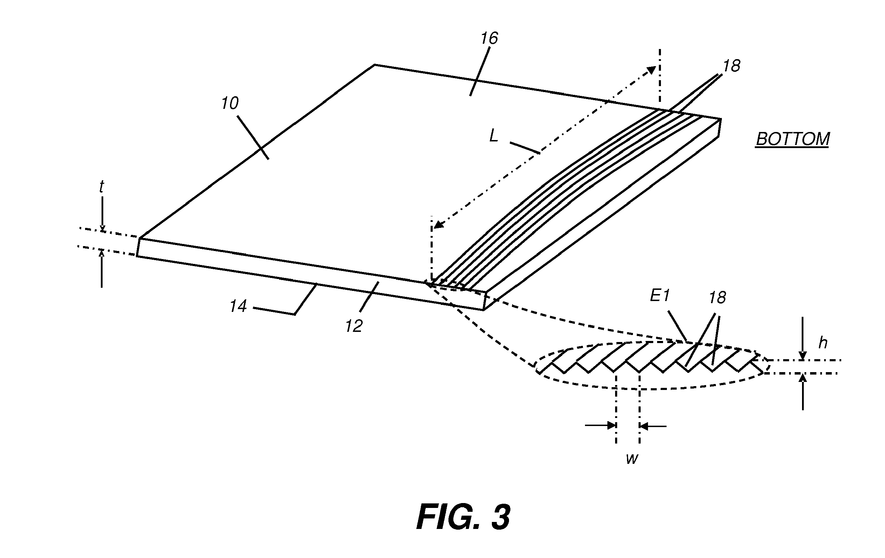

Prismatic structures 18 extend lengthwise, but need not be perfectly straight. For example, the perspective view of Figure 3, from featured surface 16, shows the flexible light guiding film of an embodiment with prismatic structures extended lengthwise and having some amount of curvature.

While prismatic structures 18 may have advantages for manufacture, featured surface 16 may include features that are other than prism-shaped. For example, this micro-structured surface may have features that are arcuate, semi-circular, conic, aspherical, trapezoidal, or a composite of at least two shapes in cross-section. In general, the features of featured surface 16 are elongated in shape in a direction perpendicular to incident face 12. The size and shape of features can be varied along this direction, and in one embodiment, at least one of the microstructures has a finite length that is less than the length L of light guiding film.

For example, the apex angle of a prismatic structure 18 may be approximately 90 degrees near incident face 12 and approximately 140 degrees farther away from light source 20 (that is, toward the central portion of light guiding film 10). The features of featured surface 16 can be continuous or discrete and they can be randomly disposed, staggered, or overlapped with each other. Finally, a bottom reflector that is planar or has a patterned relief may be disposed beneath light guide 12 or beneath featured surface 16 in order to further enhance brightness by reflecting back to the display light that has been reflected or recycled from display or backlight structures.

For reference, the relative position of a light source 20 is shown in Figure 1. Light source 20 can be a single light source, such as a CCFL (Cold-Cathode Fluorescent Lamp) or can be some other type of lamp, bulb, or LED, or an array of light sources. Light source 20 directs light through an incident face 12 that is substantially orthogonal to featured surface 16 and to an output surface 14.

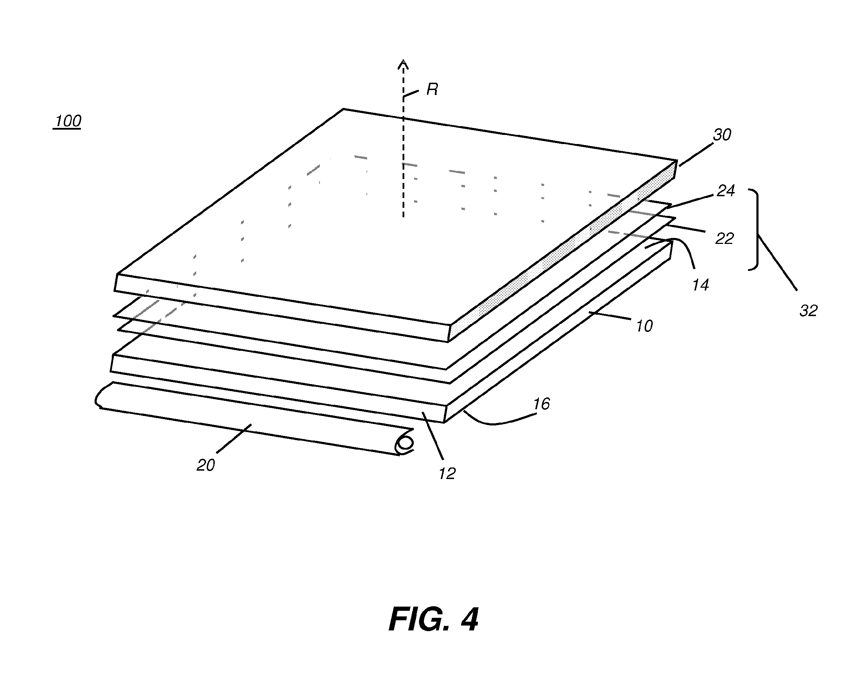

Referring now to Figure 4 there is shown a display apparatus 100 that uses light guiding film 10 as part of an illumination apparatus 32. A display panel 30, such as an LCD panel, modulates light from light guiding film 10. One or more additional films, shown as films 22 and 24 in Figure 4, may also be provided as part of illumination apparatus 32 for improving the direction, uniformity, or other characteristic of light from light guiding film 10 or to provide polarization to the light. The path of light through display panel 30 is shown in dashed arrow R.

Light guiding film 10 of the present invention is advantaged over conventional light guiding plates due to its relatively thin profile. Thickness t of light guiding film 10 is less than 1 mm. Material composition and fabrication of light guiding film 10 follows.

### Composite Film

Although light guiding film 10 offers a number of advantages, supplemental films 22 and 24 may be provided in order to improve the direction of light that is emitted from output surface 14. One type of film that can be desirable when used with light guiding film 10 provides extraction features that frustrate TIR within light guiding film 10 to provide light output and to direct light generally along a normal direction, as shown by dashed line R. It can be appreciated that there would be advantages to a design that incorporates one or more of these supplementary film elements, particularly one that provides light extraction features.

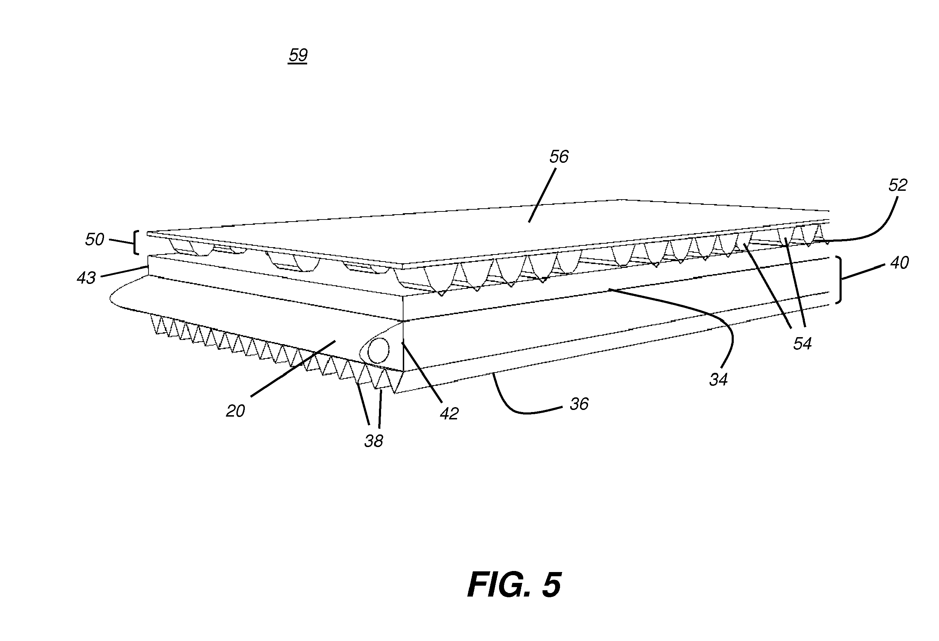

Figure 5 is a perspective view of an illumination assembly 59 for a display that includes light source 20 and light guiding layer 40 that is bounded and optically coupled to light extraction layer 50 via an optional adhesive layer 43. Light guiding layer 40 has an (light) incident face 42, a featured surface 36 having extended prismatic structures 38 and an output surface 34 (the output surface 34 is closer to the viewer than is featured surface 36).

Light extraction layer 50 has an input surface 52 that has a number of light extraction features 54. Light extraction features 54 are bonded to top surface 34 of light guiding layer 40. These light extraction features 54 help to redirect light toward light extraction film output surface 56.

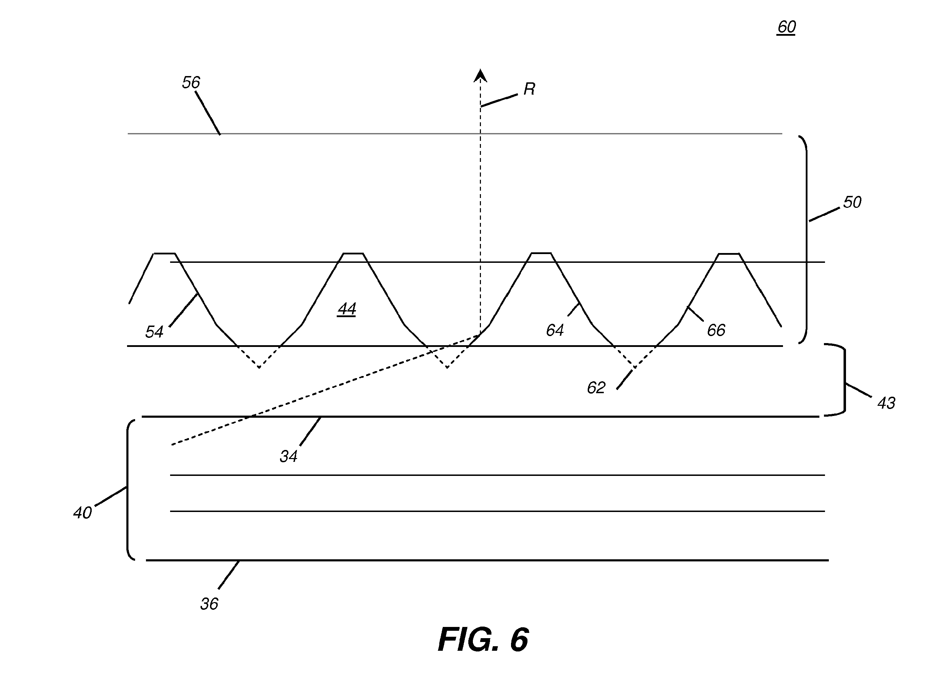

Figure 6 is an enlarged cross-sectional side view showing light guiding layer 40 optically coupled to light extraction layer 50 to form composite illumination film 60 that combines both light guiding functions and light extraction functions, while offering a thin profile, according to one embodiment. Light extraction features 54 have sides 64 and 66 and an apex 62, which may come to a point, as shown in this cross sectional view, or may be more rounded, chamfered, or flat. As indicated in phantom lines, apex 62 is bonded to top surface 34 of light guiding layer 40, for example by lamination, using adhesive layer 43. This bonding provides optical contact, needed for suitable redirection of the light that is extracted from light guiding layer 40. Significantly, columns 44 of air, or other ambient gas, are sandwiched between light extraction layer 50 and light guiding layer 40 with this arrangement. The air or other gas could be entrapped between light guiding layer 40 and light extraction layer 50. Ray R is shown as it is extracted from light guiding layer 40 and redirected by light extraction feature 54. Light ray R is emitted preferably at or near normal to output surface 56.

In the embodiment shown in Figure 6, sides 66 and 64 are formed from planar sections that extend along the sides of light extraction features 54. Sides 64 and 66 could alternately be rounded or could have only one planar section or more than two planar sections as shown.

The lower the optical contact area between light extraction features 54 and light guiding layer 40 in a certain area, the lower the amount of light (flux) that will be extracted from this area. This principle can be used to increase the light extraction that occurs in certain areas of the bonded light guide layer 40 and light extraction layer 50.

For instance, in many display applications, there can be dark regions near the corners of the display. In this case, the light flux in the light guide varies in the direction parallel to the light source. As such, even though the corners may be closer to the light source 20 depicted in Figure 5, there can be less light extracted in these locations. In keeping with the example embodiments, the intensity of the light at the corners may be increased and the uniformity of the light distribution improved by increasing the optical contact area of light extraction features 54 in corner regions of light guide layer 40. Similarly, if a region of a display or lighting device has a local brightness, the uniformity can be improved by reducing the optical contact area at the corresponding portion of light guide layer 40. In the former case, the features may be made longer or more numerous and in the latter the features may be made shorter or less numerous in order to increase and decrease, respectively, the optical contact area in the pertinent section of the film.

In general, the light flux in light guiding layer 40 will require a given amount of optical contact area from light extraction layer 50. The optical contact area can be calculated over comparatively small 'neighborhoods' of composite illumination film 60 around each location. Each neighborhood must be small enough to avoid visible nonuniformity of brightness to the viewer of the display. The neighborhood must also be small enough to support variation in brightness across light extraction layer 50 without brightness transitions between neighborhoods that are visible to the viewer of the display. As a result, the size of the neighborhood will depend on the application, and depends on pixel size of the LCD display, diffusing power of layers to be placed between light redirecting film and the LC panel, expected distance from the display to the viewer, and other application-specific factors. The size of a neighborhood might be considerably less than the size of a small LC panel pixel or might be as large as 1.0 millimeter or more in larger display applications.

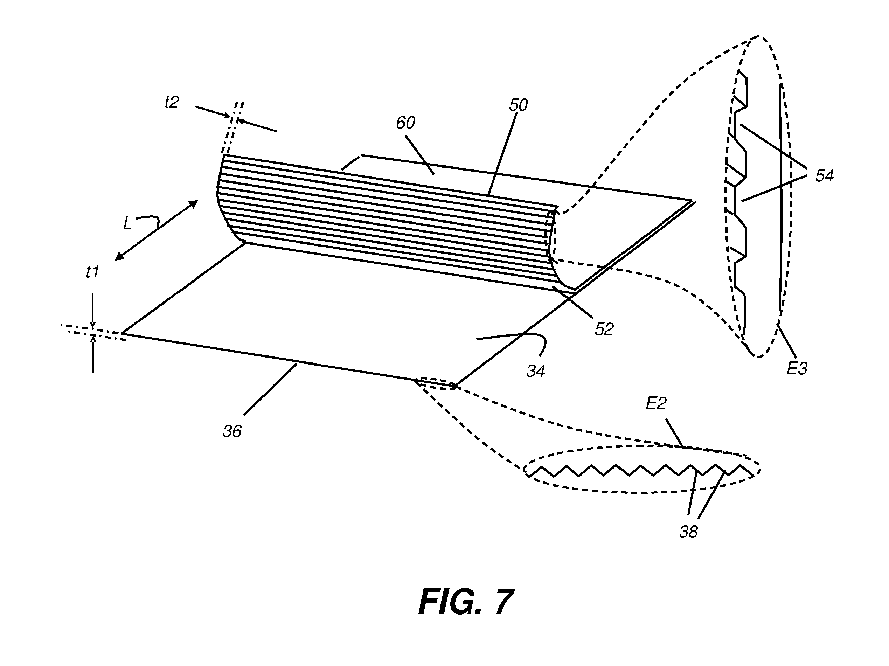

Figure 7 is a perspective view showing components of a composite illumination film in a partially disassembled state. Enlargement E2 shows a close-up side view of prismatic structures 38 on light guiding layer 40. Enlargement E3 shows a close-up side view of light extraction features 54 on input surface 52 of light extraction layer 50. Thickness t1 of light guiding layer 40 is less than 1 mm. Thickness t2 of light extraction layer 50 is similarly less than 1 mm. In the embodiment shown, light extraction features 54 are extended in a direction orthogonal to the length L extension direction of prismatic structures 38.

### Fabrication

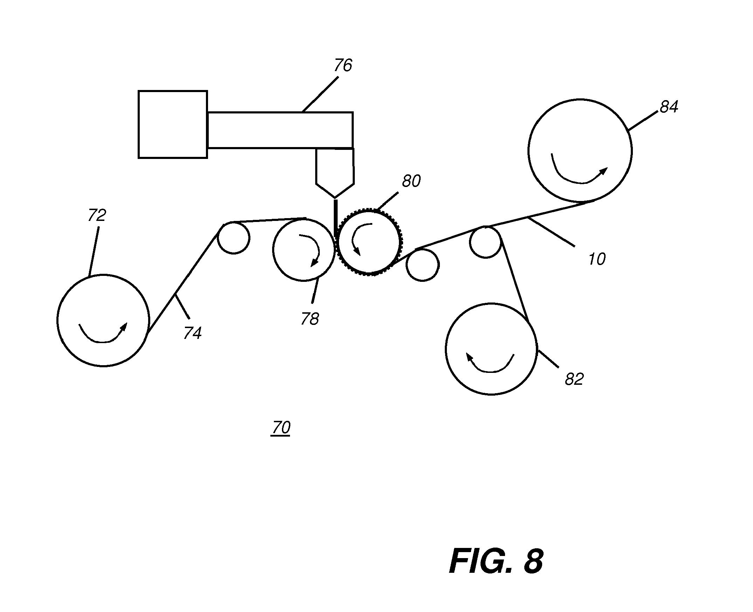

Flexible light guiding film 10 is particularly suitable for web manufacture using the so-called extrusion roll molding method described herein below. Figure 8 is a schematic block diagram of a fabrication apparatus 70 for forming flexible light guiding film 10 using extrusion roll molding and web manufacturing processes. A carrier web 74 is fed from a supply 72 and is directed between a patterned roller 80 and an opposing roller 78. An extruder 76 feeds molten material into the nip between rollers 78 and 80 and is then cooled to form the pattern of featured surface 16 in Figure 2. Spent carrier goes to a carrier take-up roller 82 releasing light guiding film 10, which is then cut or can be wrapped around a take-up roller 84. The surface of the opposing roller 78 may be hard (metallic) or soft (elastomeric).

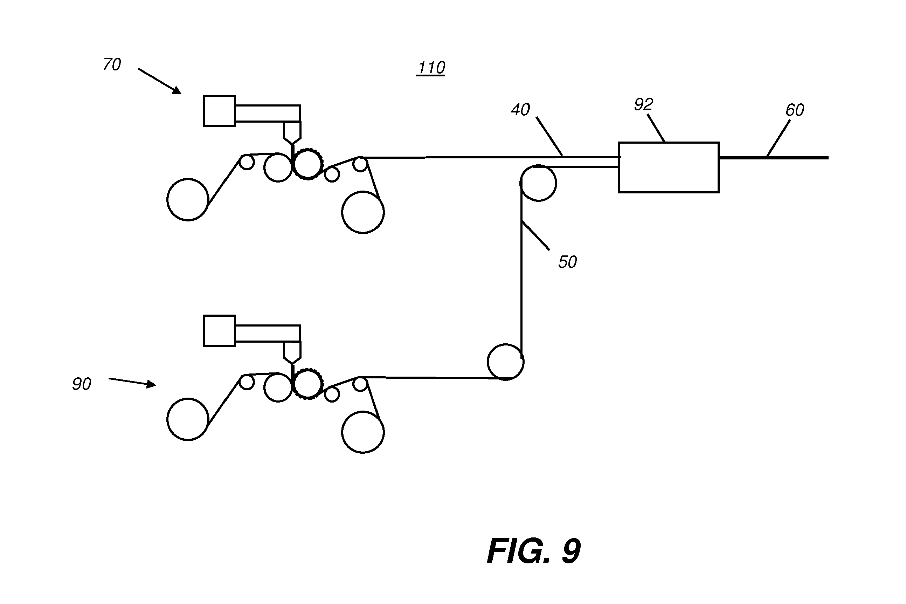

Figure 9 is a schematic block diagram of a fabrication apparatus 110 for forming composite illumination film 60 using web manufacture. Fabrication apparatus 70, as described earlier with reference to Figure 8, forms light guiding layer 40. A similar fabrication apparatus 90 is arranged to form light extraction layer 50. Light guiding layer 40 and light extraction layer 50 then go to a lamination station 92 that bonds their respective surfaces, as described with reference to Figures 5 and 6, forming composite illumination film 60. In another embodiment the light extraction film can be manufactured by a UV cast and cure operation whereby a UV-sensitive soft material is coated onto a substrate and passed on a patterned roll thus forming a patterned layer on the substrate. While in contact with the patterned surface of the roll, the UV-sensitive layer is cured and hardened by illuminating the film with a UV light. The solidified patterned layer is then peeled together with the carrier substrate from the pattern roll and wound onto a take-up roll. The light extraction film thus produced is finally bonded to the light guiding film in a manner similar to the one described above using lamination station 92 shown in Figure 9.

### Bonding Methods

Referring again to Figure 5, input surface 52 of light extraction layer 50 is bonded to output surface 34 of light guiding layer 40. There are a number of techniques that can be used for bonding these two surfaces. Lamination, applying a combination of heat and pressure, can be used to bond these surfaces together. Alternately, index-matched adhesives and various UV-type adhesives requiring a UV curing step could be used. One advantage in using adhesives relates to the controllable amount of embedment within the optical adhesive layer. This capability for varying adhesive and embedment depth can be used as a mechanism for achieving a needed level of optical coupling.

### Materials

Light guiding film 10, light guiding layer 40, and light extraction layer 50 may be formed from any of various types of transparent polymers that are melt-processable. These may include, but are not limited to, homopolymers, copolymers, and oligomers that can be further processed into polymers from the following families: polyesters; polyarylates; polycarbonates (e.g., the polycarbonate of bisphenol A); polyamides; polyether-amides; polyamide-imides; polyimides (e.g., thermoplastic polyimides and polyacrylic imides); polyetherimides; cyclic olefin polymers; impact modified polymethacrylates, polyacrylates, polyacrylonitrile and polystyrenes; copolymers and blends of styrenics (e.g., styrene-butadiene copolymers, styrene-acrylonitrile copolymers, and acrylonitrile-butadiene-styrene terpolymers); polyethers (e.g., polyphenylene oxide, poly(dimethylphenylene oxide); cellulosics (e.g., ethyl cellulose, cellulose acetate, cellulose propionate, cellulose acetate butyrate, and cellulose nitrate); and sulfur-containing polymers (e.g., polyphenylene sulfide, polysulfones, polyarylsulfones, and polyethersulfones). Blends or alloys of two or more polymers or copolymers may also be used.

Suitably, light guiding film 10 in Figure 1 and light guiding layer 40 and light extraction layer 50 in Figure 5 comprise a melt-processable, flexible polymer. For the purpose of the present invention, a flexible polymer is a polymer that in a film or sheet form can be wound under a typical service temperature range around a cylinder 5 cm in diameter without fracturing. Desirably, the light guiding film 10, light guiding layer 40 and light extraction layer 50 comprise a polymer having a light transmission of at least 85 percent (ASTM D-1003), more desirably at least 90 percent and a haze (ASTM D-1003) no greater than 2 percent, more desirably no greater than 1 percent. In general, suitable polymers may be crystalline, semi-crystalline, or amorphous in nature, but amorphous polymers are most suitable due to their ability to form optically homogeneous structures with minimal levels of haze. To best meet thermal dimensional stability requirements for display applications the polymer should have a glass transition temperature (Tg) (ASTM D3418) of at least 85°C. and a thermal expansion coefficient (ASTM D-696) of no greater than 1.0 x 10⁻⁴ mm/mm/°C at ambient temperature.

Particularly suitable melt-processable polymers useful for the light guiding film 10, light guiding layer 40 and light extraction layer 50 comprise amorphous polyesters (i.e., polyesters that do not spontaneously form crystalline morphologies under the time and temperatures employed during the extrusion roll molding process), polycarbonates (i.e., polycarbonates based on dihydric phenols such as bisphenol A), polymeric materials comprising both ester and carbonate moieties, and cyclic olefin polymers. In addition, normally brittle, melt-processable polymers such as polymethyl methacrylates, polystyrenes, and polyacrylonitriles, for example, are suitable materials for use in the present invention when they have been made flexible by the incorporation of impact modifier polymer particles (for example, impact modified PMMA that comprises soft core/hard shell latex particles). Note, however, that conventional PMMAs are not appropriate for the thin LGP of the present invention due to their brittleness.

Suitable monomers and comonomers for use in polyesters may be of the diol or dicarboxylic acid or ester type. Dicarboxylic acid comonomers include but are not limited to terephthalic acid, isophthalic acid, phthalic acid, all isomeric naphthalenedicarboxylic acids, bibenzoic acids such as 4,4'-biphenyl dicarboxylic acid and its isomers, trans-4,4'-stilbene dicarboxylic acid and its isomers, 4,4'-diphenyl ether dicarboxylic acid and its isomers, 4,4'-diphenylsulfone dicarboxylic acid and its isomers, 4,4'-benzophenone dicarboxylic acid and its isomers, halogenated aromatic dicarboxylic acids such as 2-chloroterephthalic acid and 2,5-dichloroterephthalic acid, other substituted aromatic dicarboxylic acids such as tertiary butyl isophthalic acid and sodium sulfonated isophthalic acid, cycloalkane dicarboxylic acids such as 1,4-cyclohexanedicarboxylic acid and its isomers and 2,6-decahydronaphthalene dicarboxylic acid and its isomers, bi- or multi-cyclic dicarboxylic acids (such as the various isomeric norbomane and norbomene dicarboxylic acids, adamantane dicarboxylic acids, and bicyclo-octane dicarboxylic acids), alkane dicarboxylic acids (such as sebacic acid, adipic acid, oxalic acid, malonic acid, succinic acid, glutaric acid, azelaic acid, and dodecane dicarboxylic acid.), and any of the isomeric dicarboxylic acids of the fused-ring aromatic hydrocarbons (such as indene, anthracene, pheneanthrene, benzonaphthene, fluorene and the like). Other aliphatic, aromatic, cycloalkane or cycloalkene dicarboxylic acids may be used. Alternatively, esters of any of these dicarboxylic acid monomers, such as dimethyl terephthalate, may be used in place of or in combination with the dicarboxylic acids themselves.

Suitable diol comonomers include but are not limited to linear or branched alkane diols or glycols (such as ethylene glycol, propanediols such as trimethylene glycol, butanediols such as tetramethylene glycol, pentanediols such as neopentyl glycol, hexanediols, 2,2,4-trimethyl-1,3-pentanediol and higher diols), ether glycols (such as diethylene glycol, triethylene glycol, and polyethylene glycol), chain-ester diols such as 3-hydroxy-2,2-dimethylpropyl-3-hydroxy-2,2-dimethylpropyl-3-hydroxy-2,2-d- i methyl propanoate, cycloalkane glycols such as 1,4-cyclohexanedimethanol and its isomers and 1,4-cyclohexanediol and its isomers, bi- or multicyclic diols (such as the various isomeric tricyclodecane dimethanols, norbomane dimethanols, norbornene dimethanols, and bicyclo-octane dimethanols), aromatic glycols (such as 1,4-benzenedimethanol and its isomers, 1,4-benzenediol and its isomers, bisphenols such as bisphenol A, 2,2'-dihydroxy biphenyl and its isomers, 4,4'-dihydroxymethyl biphenyl and its isomers, and 1,3-bis(2-hydroxyethoxy)benzene and its isomers), and lower alkyl ethers or diethers of these diols, such as dimethyl or diethyl diols. Other aliphatic, aromatic, cycloalkyl and cycloalkenyl diols may be used.

The polymeric materials comprising both ester and carbonate moieties may be a (miscible) blend where at least one component is a polymer based on a polyester (either homopolymer or copolymer) and the other component is a polycarbonate (either homopolymer or copolymer). Such blends may be made by, for example, conventional melt processing techniques wherein pellets of the polyester are mixed with pellets of the polycarbonate and subsequently melt blended in a single or twin screw extruder to form a homogeneous mixture. At the melt temperatures some transreaction (transesterification) may occur between the polyester and polycarbonate, the extent of which may be controlled by the addition of one or more stabilizers such as a phosphite compound. Alternatively, the polymeric materials comprising both ester and carbonate moieties may be a copolyestercarbonate prepared by reacting a dihydric phenol, a carbonate precursor (such as phosgene), and a dicarboxylic acid, dicarboxylic acid ester, or dicarboxylic halide.

Cyclic olefin polymers are a fairly new class of polymeric materials that provide high glass transition temperatures, high light transmissions, and low optical birefringence. Amorphous cyclic olefin polymers useful in the practice of the present invention include homopolymers and copolymers. The cyclic olefin (co)polymers include, for example, cyclic olefin addition copolymers of non-cyclic olefins such as α-olefins with cyclic olefins; cyclic olefin addition copolymers of ethylene, cyclic olefins and α-olefins; and homopolymers and copolymers prepared by ring opening polymerization of cyclic monomers followed by hydrogenation. Preferred cyclic olefin polymers are those composed of a cyclic olefin having a norbornene or tetracyclododecene structure. Typical examples of preferable cyclic olefin polymers and copolymers include, norbornene/ethylene copolymer, norbornene/propylene copolymer, tetracyclododocene/ethylene copolymer and tetracyclododocene/propylene copolymer. Current commercially available cyclic olefin polymers include, APEL^{™} (Mitsui Chemical Inc.), ARTON® (JSR Corporation), TOPAS® (Ticona GmbH), and Zeonex® and Zeonor® (Zeon Chemical Corporation).

The light extraction layer 50 may alternatively comprise a cured, thermosetting resin such as a thermally or UV cured monomer or oligomer such as a (meth)acrylate, urethane-acrylate oligomer, epoxy, and other well known thermosetting resins.

Thus, what is provided is an The present invention provides a composite light guiding plate comprising a light guiding layer comprising an incident face for receiving light from at least one light source, a light guiding output surface that is also generally orthogonal to the incident face, a featured surface, opposite the light-guiding output surface and generally orthogonal to the input face for redirecting light through the light guiding output surface. Further, the featured surface comprises a plurality of rows of linear prismatic structures extended in a length direction that is substantially perpendicular to the incident face and having height and width dimensions of 10 to 200 microns and wherein the length-to-width aspect ratio of the linear prismatic structures is greater than 100:1 the thickness of the light guiding layer is less than 1 mm. Further, the plate is formed from polymeric materials comprising polyesters, amorphous polyesters, polyarylates, polycarbonates, polyamides, polyether-amides, polyamide-imides, polyimides, polyetherimides, cyclic olefin polymers, impact-modified polymethacrylates, polyacrylates, polyacrylonitrile, polystyrenes, polyethers, cellulosics, sulfur-containing polymers and blends or alloys of two or more polymers or copolymers thereof Additionally, the plate comprises a light extraction layer comprising an input surface having a plurality of protruding light extraction features that have tips that are bonded to the light-guiding output surface of the light guiding layer and provide optical contact between the light guiding and light extraction layersand an illumination output surface for providing light output from the composite illumination plate. Further, the thickness of the light extraction layer is less than 1 mm and wherein one or more channels of air or other gas are sandwiched between the light guiding layer and the light extraction layer.

### PARTS LIST

10. Light guiding film
12. Incident face of light guiding film
14. Output surface
16. Featured surface
18. Prismatic structure
20. Light source
22, 24. Film
30. Display panel
32. Illumination apparatus
34. Output surface
36. Featured surface
38. Prismatic structure
40. Light guiding layer
42. Incident face
43. Adhesive layer
44. Column
50. Light extraction layer
52. Input surface
54. Light extraction feature
56. Output surface
59. Illumination assembly
60. Composite illumination film
62. Apex
64,66. Side
70. Fabrication apparatus
72. Supply
74. Carrier web
76. Extruder
78. Roller
80. Patterned roller
82. Carrier take-up roller
84. Take-up roller
90. Fabrication apparatus
92. Bonding station
100. Display apparatus
110. Fabrication apparatus
E1, E2, E3. Enlargement
h. Height
L. Length
t. Thickness
w. Width

## Claims

1. A composite light guiding plate comprising:
a light guiding layer comprising:
an incident face for receiving light from at least one light source;
a light guiding output surface that is also generally orthogonal to the incident face;
a featured surface, opposite the light-guiding output surface and generally orthogonal to the input face for redirecting light through the light guiding output surface;
wherein the featured surface comprises a plurality of rows of linear prismatic structures extended in a length direction that is substantially perpendicular to the incident face and having height and width dimensions of 10 to 200 microns,
wherein the length-to-width aspect ratio of the linear prismatic structures is greater than 100:1 the thickness of the light guiding layer is less than 1 mm; and
wherein the plate is formed from polymeric materials comprising polyesters, amorphous polyesters, polyarylates, polycarbonates, polyamides, polyether-amides, polyamide-imides, polyimides, polyetherimides, cyclic olefin polymers, impact-modified polymethacrylates, polyacrylates, polyacrylonitrile, polystyrenes, polyethers, cellulosics, sulfur-containing polymers and blends or alloys of two or more polymers or copolymers thereof; and
a light extraction layer comprising:
an input surface having a plurality of protruding light extraction features that have tips that are bonded to the light-guiding output surface of the light guiding layer and provide optical contact between the light guiding and light extraction layers;
an illumination output surface for providing light output from the composite illumination plate; and
wherein the thickness of the light extraction layer is less than 1 mm and wherein one or more channels of air or other gas are sandwiched between the light guiding layer and the light extraction layer.

2. The composite light guiding plate of claim 1 wherein the polymeric materials comprise amorphous polyesters, polycarbonates, cyclic olefin polymers, impact-modified polymethacrylates, and polymeric materials comprising ester and carbonate moieties.

3. The composite light guiding plate of claim 1 wherein each light extraction feature has a first side comprising two or more planar segments extending in the length direction and a second side comprising two or more planar segments similarly extending in the length direction and wherein the first and second sides intersect at an apex.

4. A method for forming a flexible light guiding plate comprising:
extrusion roll molding a flexible light guiding plate having a featured surface and a light-guiding output surface onto a carrier web;
releasing the light guiding plate from the used carrier web; and
wherein the light guide plate further comprises:
an incident face for receiving light from at least one light source;
an output surface, generally orthogonal to the incident face;
a featured surface generally orthogonal to the incident face for redirecting light through the output surface;
wherein the featured surface comprises a plurality of rows of linear light redirecting structures extended in a length direction that is substantially perpendicular to the incident face, each linear light redirecting structure having height and width dimensions of 10 to 200 microns;
wherein the length-to-width aspect ratio of the linear light redirecting structures is greater than 100:1 and wherein the light guiding plate has a total thickness less than 1 mm; and
wherein the plate is formed from polymeric materials comprising polyesters, amorphous polyesters, polyarylates, polycarbonates, polyamides, polyether-amides, polyamide-imides, polyimides, polyetherimides, cyclic olefin polymers, impact-modified polymethacrylates, polyacrylates, polyacrylonitrile, polystyrenes, polyethers, cellulosics, sulfur-containing polymers and blends or alloys of two or more polymers or copolymers thereof.

5. The method of claim 4 wherein the polymeric materials comprise amorphous polyesters, polycarbonates, cyclic olefin polymers, impact-modified polymethacrylates and polymeric materials comprising ester and carbonate moieties.

6. A method for forming a composite light guiding plate comprising:
forming a flexible light guiding layer having a featured surface and a light-guiding output surface by extrusion roll molding using a first carrier web;
forming a light extraction layer having an input surface with a plurality of protruding light-extraction features;
bonding protruding ends of the light extraction features of the light extraction layer to the light-guiding output surface of the light guiding layer to form the composite light guiding plate; and
wherein the composite light guiding plate further comprises:
a light guiding layer comprising:
an incident face for receiving light from at least one light source;
a light guiding output surface that is also generally orthogonal to the incident face for directing light outward from the light guiding layer;
a featured surface, opposite the light-guiding output surface and generally orthogonal to the input face for redirecting light through the light guiding output surface;
wherein the featured surface comprises a plurality of rows of linear prismatic structures extended in a length direction that is substantially perpendicular to the incident face and having height and width dimensions of 10 to 200 microns,
wherein the length-to-width aspect ratio of the linear prismatic structures is greater than 100:1 the thickness of the light guiding layer is less than 1 mm; and
wherein the plate is formed from polymeric materials comprising polyesters, amorphous polyesters, polyarylates, polycarbonates, polyamides, polyether-amides, polyamide-imides, polyimides, polyetherimides, cyclic olefin polymers, impact-modified polymethacrylates, polyacrylates, polyacrylonitrile, polystyrenes, polyethers, cellulosics, sulfur-containing polymers and blends or alloys of two or more polymers or copolymers thereof; and
a light extraction layer comprising:
an input surface having a plurality of protruding light extraction features that have tips that are bonded to the light-guiding output surface of the light guiding layer and provide optical contact between the light guiding and light extraction layers;
an illumination output surface for providing light output from the composite light guiding plate; and
wherein the thickness of the light extraction layer is less than 1 mm and wherein one or more channels of air or other gas are sandwiched between the light guiding layer and the light extraction layer.

7. The method of claim 6 wherein the polymeric materials comprise amorphous polyesters, polycarbonates, cyclic olefin polymers, impact-modified polymethacrylates and polymeric materials comprising ester and carbonate moieties.

8. The method of claim 6 wherein bonding uses an adhesive.
